# EUROPEAN PATENT SPECIFICATION

(11) **EP 3 140 587 B1**
(45) Date of publication and mention of the grant of the patent: **06.11.2019**
(21) Application number: 15724863.4
(22) Date of filing: 07.05.2015
(51) Int. Cl.: F17C 1/00, B65G 5/00

(54) **GAS STORAGE REFILL AND DEWATERING**
GASSPEICHERNACHFÜLLUNG UND -ENTWÄSSERUNG
RECHARGE ET ASSÈCHEMENT DE STOCKAGE DE GAZ

(30) Priority: 08.05.2014 US 201414272684; 26.08.2014 US 201414468615
(43) Date of publication of application: 15.03.2017
(73) Proprietor: L'Air Liquide Société Anonyme pour l'Etude et l'Exploitation des Procédés Georges Claude, 75007 Paris (FR)
(72) Inventor: STRYBOS, Ronald, Kountze, Texas 77625 (US)
(74) Representative: De Cuenca, Emmanuel Jaime
(86) International application number: PCT/US2015/029662
(87) International publication number: WO 2015/171877

(56) References cited:
- EP-A1- 0 086 506
- WO-A1-2013/173709
- DE-A1- 10 117 617
- GB-A- 2 460 550
- US-A1- 2013 315 669
- BARRON T F: "REGULATORY, TECHNICAL PRESSURES PROMPT MORE U.S. SALT-CAVERN GAS STORAGE", OIL AND GAS JOURNAL, PENNWELL, HOUSTON, TX, US, vol. 92, no. 37, 12 September 1994 (1994-09-12), XP000485821, ISSN: 0030-1388
- POTTIER J D ET AL: "Mass storage of Hydrogen", NATO ASI SERIES. SERIES E, APPLIED SCIENCES; HYDROGEN ENERGY SYSTEM : PRODUCTION AND UTILIZATION OF HYDROGEN AND FUTURE ASPECTS ; [PROCEEDINGS OF THE NATO ADVANCED STUDY INSTITUTE ON HYDROGEN ENERGY SYSTEM, UTILIZATION OF HYDROGEN AND FUTURE ASPECTS], vol. 295, 1 January 1995 (1995-01-01), pages 167-179, XP008139790, ISSN: 0168-132X

## Description

### Background

Hydrogen is commonly supplied to customers that are connected to a supplier's hydrogen pipeline system. Typically, the hydrogen is manufactured by steam methane reforming in which a hydrocarbon such as methane and steam are reacted at high temperature in order to produce a synthesis gas containing hydrogen and carbon monoxide. Hydrogen may then be separated from the synthesis gas to produce a hydrogen product stream that is introduced into the pipeline system for distribution to customers that are connected to the pipeline system. Alternatively, hydrogen produced from the partial oxidation of a hydrocarbon can be recovered from a hydrogen rich stream.

Typically, hydrogen is supplied to customers under agreements that require availability and reliability for the steam methane reformer or hydrogen recovery plant. When a steam methane reformer is taken off-line for unplanned or extended maintenance, the result could be a violation of such agreements. Additionally, there are instances in which customer demand can exceed hydrogen production capacity of existing plants in the short term. Having a storage facility to supply back-up hydrogen to the pipeline supply is therefore desirable in connection with hydrogen pipeline operations.

Considering that hydrogen production plants on average have production capacities that are roughly 1.5 million cubic meters (50 million standard cubic feet) per day, a storage facility for hydrogen that would allow a plant to be taken off-line, to be effective, would need to have storage capacity in the order of 1 billion standard cubic feet or greater.

In order to provide this large storage capacity, high pressure gases, such as but not limited to nitrogen, air, carbon dioxide, hydrogen, helium, and argon, are stored in caverns, whether leached in salt formations or created by hard rock mining. Such salt caverns are known for example from the document GB-A-2460550. A minimum volume of gas is stored in the cavern to provide adequate pressure to maintain the integrity of the cavern and prevent the cavern roof from collapsing and to keep the cavern walls from moving inward. This minimum volume of gas is called the pad gas or base gas. The amount of gas stored in addition to the pad gas or base gas volume is called the working gas or working inventory. For the purpose of this invention, the definition of high pressure is defined as a pressure at or above 10 atm.

### Summary

A method of maintaining pressure in an underground storage volume during transient operation is presented. The method includes storing a first compressible fluid in an underground storage volume, determining a safe minimum operating pressure (Pₘᵢₙ), and a safe maximum operating pressure (Pₘₐₓ) for said underground storage volume, measuring the pressure (P_{act}), of said underground storage volume, removing at least a portion of said first compressible fluid from said underground storage volume, and concurrently, introducing an incompressible fluid into said underground storage volume, wherein the flow rate of said incompressible fluid is controlled such that Pₘᵢₙ < P_{act} < Pₘₐₓ.

The underground storage volume may be an underground salt cavern. The first compressible fluid may be selected from the group consisting of nitrogen, air, carbon dioxide, hydrogen, helium, and argon. The compressible fluid may be selected from the group consisting of brine, water, or water slurry.

The method includes a length of casing, permanently cemented into the surrounding rock formations, with a final cemented casing shoe defining the practical endpoint at an approximate depth (D_{casing}), and determining a minimum pressure gradient (Gₘᵢₙ) for said underground storage volume, wherein Pₘᵢₙ > D_{casing} x Gₘᵢₙ. The method may be such that 0.0014 bar per 0.3048 meter of depth < Gₘᵢₙ <0.0028 bar per 0.3048 meter of depth (0.2 psi/ft of depth < Gₘᵢₙ < 0.4 psi/ft of depth). The method is such that 0.0021 bar per 0.3048 meter of depth< Gₘᵢₙ <0.0024 bar per 0.3048 meter of depth (0.3 psi/ft of depth < Gₘᵢₙ < 0.35 psi/ft of depth).

The method includes a length of casing, permanently cemented into the surrounding rock formations, with a final cemented casing shoe defining the practical endpoint at an approximate depth (D_{casing}), and determining a maximum pressure gradient (Gₘₐₓ) for said underground storage volume, wherein Pₘₐₓ < D_{casing} X Gₘₐₓ.

The method is such that 0.0044 bar to 0.0062 bar per 0.3048 meter of depth (0.7 psi/ft of depth < Gₘᵢₙ < 0.9 psi/ft of depth). The method is such that 0.0055 bar to 0.0059 bar per 0.3048 meter of depth (0.8 psi/ft of depth < Gₘᵢₙ < 0.85 psi/ft of depth). The incompressible fluid may not exceed a predetermined maximum flow rate (Fₘₐₓ). The method may be such that Fₘₐₓ is 6.096 meters per second (20 feet per second).

The method includes storing a first compressible fluid in an underground storage volume, determining a safe minimum operating pressure (Pₘᵢₙ), and a safe maximum operating pressure (Pₘₐₓ) for said underground storage volume, measuring the pressure (P_{act}), of said underground storage volume, introducing said first compressible fluid into said underground storage volume, and concurrently, removing an incompressible fluid from said underground storage volume, wherein the flow rate of said incompressible fluid is controlled such that Pₘᵢₙ < P_{act} < Pₘₐₓ.

The method may include injecting a second compressible fluid into an incompressible fluid within the underground storage volume, thereby producing a gas lift fluid, removing said gas lift fluid from said underground storage volume, introducing said gas lift fluid into a degassing system, thereby producing the incompressible fluid and the second compressible gas. The second compressible fluid may be selected from the group consisting of nitrogen, carbon dioxide, air, helium, or argon. The degassing system may be a degassing pond or a degassing tank.

### Brief Description of the Drawings

For a further understanding of the nature and objects for the present invention, reference should be made to the following detailed description, taken in conjunction with the accompanying drawings, in which like elements are given the same or analogous reference numbers and wherein:
- Figure 1 illustrates an embodiment of the current invention; and
- Figure 2 illustrates another embodiment of the current invention.

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The safe operating pressure range for high pressure gas caverns is defined as the pressure between the minimum pressure and maximum pressure of the cavern. These pressure extremes are intended to prevent potential collapse or fracture of the cavern. The minimum operating pressure is a function of the depth of the last cemented pipe casing shoe and the minimum pressure gradient, which is determined for the evaluation of the strength of the salt or rock formation and is typically of a value of 0.0021 bar per 0.3048 meter of depth< Gₘᵢₙ <0.0024 bar per 0.3048 meter of depth (0.3 psi to 0.35 psi per foot of depth). The maximum operating pressure is a function of the depth of the last cemented pipe casing shoe and the maximum pressure gradient typically defined by regulatory statute and is typically of a value of 0.0055 bar to 0.0059 bar per 0.3048 meter of depth (0.8 psi to 0.85 psi per foot of depth). A maximum product pressure increase rate (PRateₘₐₓ) may be determined, wherein the maximum product pressure increase is controlled such that PRateₘₐₓ, < 150 psig per day.

In one embodiment of the present invention, it is claimed that the addition or removal of liquid is controlled such that the operating pressure of the cavern is maintained above the minimum pressure and below the maximum pressure to maintain cavern integrity. The use of flow and pressure control valves, whether automatic or manual or in combination, on the liquid lines and the storage gas lines may be the primary control means to implement this method. The control of liquid flow and pressure and storage gas flow and pressure may be by operation of the valves so as to maintain the required pressure in the cavern to prevent cavern collapse or fracture.

The addition or removal of liquid may be controlled such that the velocity of the liquid re-entering the cavern is less than 6.096 m/s (20 ft/sec) based on the calculation of the internal cross sectional area of the liquid piping and the flow rate of the liquid through the piping. Velocities in excess of 6.096 m/s (20 ft/sec) may cause a natural frequency harmonic that can cause the failure of the liquid piping and could lead to an uncontrolled gas release.

The initial removal of liquid from the cavern may require the use of a gas lift to lighten the density of the liquid to assist in starting the liquid flow from the cavern. Since the first storage gas flow into the cavern may not displace the liquid, a gas lift, such as nitrogen, carbon dioxide, air, helium, or argon, is injected down the liquid piping, either by means of a coiled tubing, or other small diameter piping, such that the density of the liquid is decreased so that the compressed storage gas introduced into the cavern forces the liquid out of the cavern. The liquid and lift gas mixture is then piped to a degassing pond or tank. Liquid flow rate is maintained at a velocity less than 20ft/sec as described above.

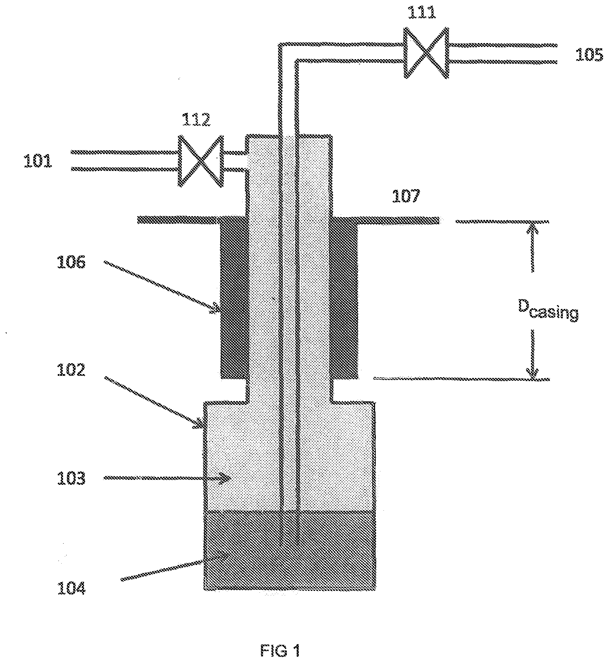

Turning to Figure 1, compressible fluid **103** is stored in underground storage volume **102.** Underground storage volume **102** may be a salt cavern, a depleted reservoir in an oil or gas field, an aquifer, or any system know to one skilled in the art. The underground storage volume **102** may have a first conduit **101,** with flow and/or pressure control valve **112,** for admitting or removing the compressible fluid **103.** The underground storage volume **102** may contain an incompressible fluid **104.** Incompressible fluid **104** may be water, water slurry, brine, diesel, or any appropriate fluid known to one skilled in the art. The underground storage volume **102** may have a second conduit **105,** with flow and/or pressure control valve **111,** for admitting or removing incompressible fluid **104.**

As the underground storage volume may be at a considerable depth below grade **107,** the nominally vertical portions of first conduit **101** and/or second conduit **105** may be anchored into the surrounding rock formations by means of a cemented casing **106.** The depth of the casing from grade **106** to the limit of the cemented casing **106** is the depth of the casing D_{casing}.

A safe minimum operating pressure Pₘᵢₙ and a safe maximum operating pressure Pₘₐₓ are determined for the underground storage volume. A minimum pressure gradient Gₘᵢₙ may be such that 0.0014 bar per 0.3048 meter of depth < Gₘᵢₙ <0.0028 bar per 0.3048 meter of depth (0.2 psi/ft of depth < Gₘᵢₙ < 0.4 psi/ft of depth. Gₘᵢₙ may be such that 0.0021 bar per 0.3048 meter of depth< Gₘᵢₙ <0.0024 bar per 0.3048 meter of depth (0.3 psi/ft of depth < Gₘᵢₙ < 0.35 psi/ft of depth). The safe minimum operating pressure Pₘᵢₙ may be defined as Pₘᵢₙ > D_{casing} X Gₘᵢₙ

A maximum pressure gradient Gₘₐₓ may be such that 0.0044 bar to 0.0062 bar per 0.3048 meter of depth (0.7 psi/ft of depth < Gₘₐₓ < 0.9 psi/ft of depth). Gₘₐₓ may be such that 0.0055 bar to 0.0059 bar per 0.3048 meter of depth (0.8 psi/ft of depth < Gₘₐₓ < 0.85 psi/ft of depth). The safe maximum operating pressure Pₘₐₓ may be defined as Pₘₐₓ < D_{casing} x Gₘₐₓ.
In one embodiment of the present invention, as compressible fluid **103** is extracted from the underground storage volume **102,** the transient pressure condition may be controlled by the inlet flow rate of incompressible fluid **104,** such that Pₘᵢₙ < P_{act} < Pₘₐₓ. The maximum flow rate of incompressible fluid **104** may not exceed a predetermined maximum flow rate (Fₘₐₓ). Fₘₐₓ may not exceed 6.096 meters per second (20 feet per second).

In another embodiment of the present invention, as compressible fluid **103** is introduced into the underground storage volume **102,** the transient pressure condition may be controlled by the extraction flow rate of incompressible fluid **104,** such that Pₘᵢₙ < P_{act} < Pₘₐₓ. The maximum flow rate of incompressible fluid **104** may not exceed a predetermined maximum flow rate (Fₘₐₓ). Fₘₐₓ may not exceed 6.096 meters per second (20 feet per second).

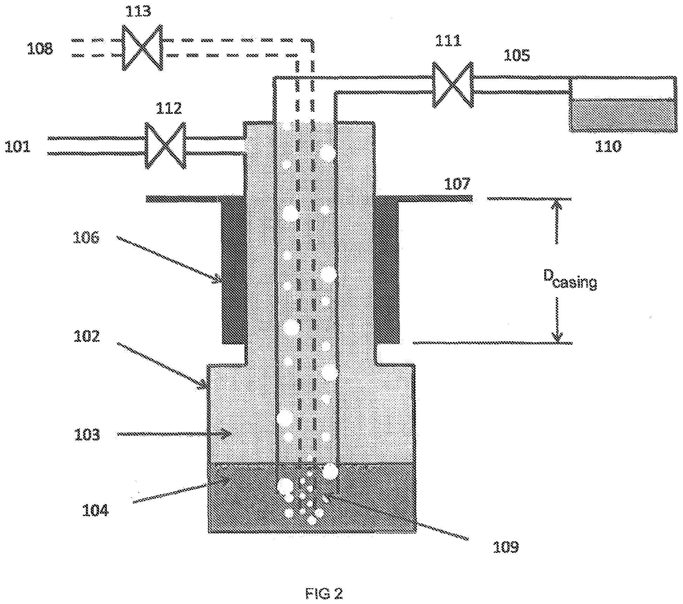

Turning to Figure 2, in another embodiment of the present invention, a second compressible fluid **108,** with flow and/or pressure control valve **113,** may be introduced into incompressible fluid **104** within the storage volume, thereby producing a gas lift fluid **109.** The gas lift fluid **109** is then removed from the underground storage volume **102** through conduit **105** and sent to degassing system **110.** Degassing system **110** may be a degassing pond or a degassing tank.

## Claims

1. A method of maintaining pressure in an underground storage volume (102) during transient operation, comprising:
• storing a first compressible fluid (103) in an underground storage volume (102),
• determining a safe minimum operating pressure (Pₘᵢₙ), and a safe maximum operating pressure (Pₘₐₓ) for said underground storage volume (102),
• measuring the pressure (P_{act}), of said underground storage volume (102),
• removing at least a portion of said first compressible fluid (103) from said underground storage volume (102),
• concurrently, introducing an incompressible fluid (104) into said underground storage volume (102),
wherein the flow rate of said incompressible fluid is controlled such that Pₘᵢₙ < P_{act} < Pₘₐₓ,
**characterized in that** the method further comprises :
• setting a length of casing (106), permanently cemented into the surrounding rock formations, with a final cemented casing shoe defining the practical endpoint at an approximate depth (D_{casing}),
• determining a minimum pressure gradient (Gmin) for said underground storage volume (102), wherein Pₘᵢₙ > D_{casing} x Gₘᵢₙ,
• determining a maximum pressure gradient (Gₘₐₓ) for said underground storage volume, wherein Pₘₐₓ < D_{casing} x Gₘₐₓ,
wherein Gₘᵢₙ is between 0.0021 bar per 0.3048 meter of depth and 0.0024 bar per 0.3048 meter of depth (0.3 psi/ft of depth < Gₘᵢₙ < 0.35 psi/ft of depth), and wherein Gₘₐₓ is between 0.0055 bar per 0.3048 meter of depth and 0.0059 bar per 0.3048 meter of depth (0.8 psi/ft of depth < Gₘₐₓ < 0.85 psi/ft of depth).

2. The method of claim 1, wherein said underground storage volume (102) is an underground salt cavern.

3. The method of claims 1 or 2, wherein said first compressible fluid (103) is selected from the group consisting of nitrogen, air, carbon dioxide, hydrogen, helium, and argon.

4. The method of claim 3, wherein said first compressible fluid (103) is hydrogen.

5. The method as claimed in one of the preceding claims, wherein said incompressible fluid (104) is selected from the group consisting of brine, water, or water slurry.

6. The method as claimed in one of the preceding claims, wherein said incompressible fluid (104) does not exceed a predetermined maximum flow rate (Fₘₐₓ).

7. The method of claim 6, wherein Fₘₐₓ is 6.096 meters per second (20 feet per second).

8. The method as claimed in one of the preceding claims, further comprising determining a maximum product pressure increase rate (PRateₘₐₓ) wherein the maximum product pressure increase is controlled such that PRateₘₐₓ, < 10,34 bar g (150 psig) per day.

## Patentansprüche

1. Verfahren zum Aufrechterhalten von Druck in einem Untertagespeichervolumen (102) während einem Übergangsbetrieb, umfassend:
• das Speichern eines ersten verdichtbaren Fluids (103) in einem Untertagespeichervolumen (102),
• das Feststellen eines sicheren Mindestbetriebsdrucks (Pₘᵢₙ) und eines sicheren maximalen Betriebsdrucks (Pₘₐₓ) für das Untertagespeichervolumen (102),
• das Messen des Drucks (P_{act}) des Untertagespeichervolumens (102),
• das Entfernen wenigstens eines Teils des ersten verdichtbaren Fluids (103) aus dem Untertagespeichervolumen (102),
• das gleichzeitige Einführen eines unverdichtbaren Fluids (104) in das Untertagespeichervolumen (102),
wobei der Volumenstrom des unverdichtbaren Fluids derart gesteuert wird, dass Pₘᵢₙ < P_{act} < Pₘₐₓ ist,
**dadurch gekennzeichnet, dass** das Verfahren weiter umfasst:
• das Verhärten einer Länge einer Verrohrung (106), die dauerhaft in den umgebenden Gesteinsschichten einzementiert ist, mit einem endgültigen einzementierten Verrohrungsschuh, der den praktischen Endpunkt in einer ungefähren Tiefe (D_{casing}) definiert,
• das Feststellen eines Mindestdruckgradienten (Gmin) für das Untertagespeichervolumen (102), wobei Pₘᵢₙ > D_{casing} x Gₘᵢₙ ist,
• das Feststellen eines maximalen Druckgradienten (Gₘₐₓ) für das Untertagespeichervolumen, wobei Pₘₐₓ < D_{casing} x Gₘₐₓ ist,
wobei Gₘᵢₙ zwischen 0,0021 Bar pro 0,3048 Meter Tiefe und 0,0024 Bar pro 0,3048 Meter Tiefe (0,3 psi/ft Tiefe < Gₘᵢₙ < 0,35 psi/ft Tiefe) liegt und wobei Gₘₐₓ zwischen 0,0055 Bar pro 0,3048 Meter Tiefe und 0,0059 Bar pro 0,3048 Meter Tiefe (0,8 psi/ft Tiefe < Gₘₐₓ < 0,85 psi/ft Tiefe) liegt.

2. Verfahren nach Anspruch 1, wobei das Untertagespeichervolumen (102) eine Untertagesalzkaverne ist.

3. Verfahren nach den Ansprüchen 1 oder 2, wobei das erste verdichtbare Fluid (103) ausgewählt ist aus der Gruppe bestehend aus Stickstoff, Luft, Kohlendioxid, Wasserstoff, Helium und Argon.

4. Verfahren nach Anspruch 3, wobei das erste verdichtbare Fluid (103) Wasserstoff ist.

5. Verfahren nach einem der vorstehenden Ansprüche, wobei das unverdichtbare Fluid (104) ausgewählt ist aus der Gruppe bestehend aus Lauge, Wasser oder Wasserschlamm.

6. Verfahren nach einem der vorstehenden Ansprüche, wobei das unverdichtbare Fluid (104) einen vorbestimmten maximalen Volumenstrom (Fₘₐₓ) nicht überschreitet.

7. Verfahren nach Anspruch 6, wobei Fₘₐₓ 6,096 Meter pro Sekunde (20 Fuß pro Sekunde) beträgt.

8. Verfahren nach einem der vorstehenden Ansprüche, weiter umfassend das Feststellen einer maximalen Produktdrucksteigerungsrate (PRateₘₐₓ), wobei die maximale Produktdrucksteigerung derart gesteuert wird, dass die PRateₘₐₓ, < 10,34 Bar g (150 psig) pro Tag beträgt.

## Revendications

1. Procédé de maintien de pression dans un volume de stockage souterrain (102) pendant une opération transitoire, comprenant :
• le stockage d'un premier fluide compressible (103) dans un volume de stockage souterrain (102),
• la détermination d'une pression d'exploitation minimale sûre (Pₘᵢₙ) et d'une pression d'exploitation maximale sûre (Pₘₐₓ) pour ledit volume de stockage souterrain (102),
• la mesure de la pression (P_{act}) dudit volume de stockage souterrain (102),
• l'enlèvement d'au moins une portion dudit premier fluide compressible (103) dudit volume de stockage souterrain (102),
• concurremment, l'introduction d'un fluide incompressible (104) dans ledit volume de stockage souterrain (102),
dans lequel le débit dudit fluide incompressible est commandé de sorte que Pₘᵢₙ < P_{act} < Pₘₐₓ,
**caractérisé en ce que** le procédé comprend en outre :
• la fixation d'une longueur de tubage (106), cimenté de manière permanente dans les formations de roche environnantes, avec un sabot de tubage final cimenté définissant le point de fin pratique à une profondeur approximative (D_{tubage}),
• la détermination d'un gradient de pression minimal (Gmin) pour ledit volume de stockage souterrain (102), dans lequel Pₘᵢₙ > D_{tubage} x Gₘᵢₙ,
• la détermination d'un gradient de pression maximal (Gₘₐₓ) pour ledit volume de stockage souterrain, dans lequel Pₘₐₓ < D_{tubage} x Gₘₐₓ,
dans lequel Gₘᵢₙ est entre 0,0021 bar par 0,3048 mètre de profondeur et 0,0024 bar par 0,3048 mètre de profondeur (0,3 psi/ft de profondeur < Gₘᵢₙ < 0,35 psi/ft de profondeur), et dans lequel Gₘₐₓ est entre 0,0055 bar par 0,3048 mètre de profondeur et 0,0059 bar par 0,3048 mètre de profondeur (0,8 psi/ft de profondeur < Gₘₐₓ < 0,85 psi/ft de profondeur).

2. Procédé selon la revendication 1, dans lequel ledit volume de stockage souterrain (102) est une caverne de sel souterraine.

3. Procédé selon les revendications 1 ou 2, dans lequel ledit premier fluide compressible (103) est sélectionné dans le groupe constitué par l'azote, l'air, le dioxyde de carbone, l'hydrogène, l'hélium et l'argon.

4. Procédé selon la revendication 3, dans lequel ledit premier fluide compressible (103) est de l'hydrogène.

5. Procédé selon l'une des revendications précédentes, dans lequel ledit fluide incompressible (104) est sélectionné dans le groupe constitué par la saumure, l'eau, ou une pâte aqueuse.

6. Procédé selon l'une des revendications précédentes, dans lequel ledit fluide incompressible (104) ne dépasse pas un débit maximal prédéterminé (Fₘₐₓ).

7. Procédé selon la revendication 6, dans lequel Fₘₐₓ fait 6,096 mètres par seconde (20 pieds par seconde).

8. Procédé selon l'une des revendications précédentes, comprenant en outre la détermination d'un taux d'augmentation de pression de produit maximale (PTauxₘₐₓ) dans lequel l'augmentation de pression de produit maximale est commandée de sorte que PTauxₘₐₓ < 10,34 bar g (150 psig) par jour.
